# EUROPÄISCHE PATENTSCHRIFT

(11) **EP 1 590 090 B1**
(45) Veröffentlichungstag und Bekanntmachung des Hinweises auf die Patenterteilung: **16.09.2009**
(21) Anmeldenummer: 04706645.1
(22) Anmeldetag: 30.01.2004
(51) Int. Cl.: B01L 3/02, G01N 35/10

(54) **DISPENSIERVERFAHREN**
DISPENSING METHOD
PROCEDE DE DISTRIBUTION

(30) Priorität: 01.02.2003 DE 10304018
(43) Veröffentlichungstag der Anmeldung: 02.11.2005
(73) Patentinhaber: Evotec AG, 22525 Hamburg (DE)
(72) Erfinder: WENDT, Oliver, 20257 Hamburg (DE); PRECKEL, Hartwig, 21029 Hamburg (DE)
(74) Vertreter: von Kreisler Selting Werner
(86) Internationale Anmeldenummer: PCT/EP2004/000823
(87) Internationale Veröffentlichungsnummer: WO 2004/067177

(56) Entgegenhaltungen:
- DE-A- 3 614 960
- US-A1- 2001 016 177
- PATENT ABSTRACTS OF JAPAN vol. 2000, no. 04, 31. August 2000 (2000-08-31) & JP 2000 028623 A (ALOKA CO LTD), 28. Januar 2000 (2000-01-28)

## Beschreibung

Die Erfindung betrifft ein Dispensierverfahren zum Dispensieren von chemischen und/ oder biologischen Flüssigkeiten in Kleinstmengen mittels einer Flüssigkeitsfördervorrichtung, insbesondere einer Mikropumpe in einer Dispensier- und/ oder Pipettiervorrichtung und/ oder anderen Mikrosystemen.

Zum Dispensieren und Pipettieren von sehr kleinen Flüssigkeitsmengen im Bereich weniger pl bis µl werden als Flüssigkeitsfördervorrichtung beispielsweise Mikropumpen eingesetzt, die Tropfen durch eine Düse der Dispensier- bzw. Pipettiervorrichtung ausstoßen. Derartige Dispensier- oder Pipettiervorrichtungen weisen als Mikropumpe eine Flüssigkeitskammer auf, in der eine Probenflüssigkeit oder eine Systemflüssigkeit enthalten ist. Eine Wand der Probenkammer ist beispielsweise elastisch, insbesondere als Membran ausgebildet. Auf die elastische Wand wirkt ein Impulsgeber, wie beispielsweise ein Piezo-Aktor, ein. Durch den Piezo-Aktor können in der Flüssigkeitskammer Druckimpulse erzeugt werden. Diese bewirken ein Abgeben von Flüssigkeitstropfen aus der Düse. Hierbei ist das Tröpfchenvolumen klar definiert, so dass die abgegebene Flüssigkeitsmenge über die Tröpfchenanzahl eindeutig bestimmt ist. Das Volumen der einzelnen Tröpfchen liegt hierbei im Bereich von 50 - 100 pl.

Prinzipbedingt sind Mikropumpen sehr störanfällig. Dies liegt in der sehr kleinen Dimensionierung und der hiermit verbundenen Empfindlichkeit für Ablagerungen und Verstopfungen. Beispielsweise kann das Vorhandensein einer Luftblase auf Grund Ihrer Kompressibilität dazu führen, dass auch bei Betätigen der Membran der Mikropumpe keine Förderwirkung oder eine zu geringe Förderwirkung auftritt. Des Weiteren können Oberflächenspannungseffekte die einwandfreie Funktion derartiger Mikropumpen beeinträchtigen. Insbesondere bei der Automatisierung, wie beispielsweise im Medium- oder Hochdurchsatzscreening, ist eine hohe Zuverlässigkeit derartiger Mikropumpen erforderlich. Ggf. dennoch auftretende Störungen sollten automatisch erkannt und behoben werden. Ein häufig auftretendes Problem bei Mikropumpen besteht beispielsweise darin, dass sich innerhalb der Flüssigkeitskammer Ablagerungen, beispielsweise aus Kristallisationen der in der Flüssigkeitskammer vorhandenen Flüssigkeit bilden. Ferner bilden sich innerhalb der Flüssigkeitskammer, einem mit der Flüssigkeitskammer verbundenen Kanal oder der Düse häufig Gasblasen, insbesondere Luftblasen. Dies führt häufig zum Ausfall der Mikropumpe. Bei in Dispensier- und Pipettiervorrichtungen eingesetzten Mikropumpen führen Gasblasen, sofern sie nicht unmittelbar zum Ausfall der Mikropumpe führen, zumindest zu einer Verfälschung der abgegebenen Tropfengröße und somit zu einer Verfälschung der abgegebenen Flüssigkeitsmenge.

Um Störungen bei derartigen Flüssigkeitsfördervorrichtungen zu vermeiden, ist es bekannt, die Flüssigkeitskammer in einem Reinigungsschritt mit Flüssigkeit zu spülen. Hierbei wird zum Spülen die in der Flüssigkeitskammer befindliche Flüssigkeit, d.h. die Proben- oder Systemflüssigkeit, verwendet. Es ist auch möglich, über eine gesonderte Verbindung der Flüssigkeitskammer mit einem Reservoir ein Spülen der Kammer mit Spülflüssigkeit durchzuführen. Hierbei kann die Pumpe ggf. mit erhöhter Frequenz oder Amplitude betrieben werden (US 2001/0016177). Derartige bekannte Spülverfahren sind jedoch zeitaufwendig. Dies ist insbesondere beim Verwenden von derartigen Flüssigkeitsfördervorrichtungen im Medium- oder Hochdurchsatzscreening nachteilig. Ferner ist bei bekannten Spülverfahren der Verbrauch an Flüssigkeit äußerst hoch. Dies ist insbesondere nachteilig, wenn bei einer Dispensiervorrichtung das Spülen mit teurer Probenflüssigkeit erfolgen muss.

Aufgabe der Erfindung ist es, ein Verfahren zum Reinigen einer Flüssigkeitsfördervorrichtung zu schaffen, mit dem ein schnelles und zuverlässiges Reinigen gewährleistet ist.

Die Lösung der Aufgabe erfolgt erfindungsgemäß durch die Merkmale des Anspruchs 1.

Bei dem erfindungsgemäßen Verfahren zum Dispensieren von chemischen und/ oder biologischen Flüssigkeiten wird in einem Dispensierschritt mittels einer Dispensiervorrichtung Flüssigkeit abgegeben. Hierzu wirkt ein Impulsgeber wie ein Piezo-Aktor auf eine Flüssigkeitskammer, in der die abzugebende Probenflüssigkeit enthalten ist. Durch den Impulsgeber wird ein Druckimpuls in der Flüssigkeitskammer erzeugt, so dass ein Flüssigkeitströpfchen durch einen Kapillarkanal abgegeben wird. Während eines Dispensierschrittes werden mehrere Tröpfchen, vorzugsweise mindestens 5, besonders bevorzugt mindestens 10, und insbesondere mindestens 20 Tröpfchen abgegeben. Insbesondere können in einem Dispensierschritt bis zu 500, ggf. sogar bis zu 1.000 Tröpfchen abgegeben werden. Die Anzahl der abgegebenen Tröpfchen korrespondiert mit der Impulsanzahl des Impulsgebers, so dass die abgegebene Flüssigkeitsmenge unmittelbar definiert werden kann, da das Volumen des einzelnen Tröpfchens bekannt ist.

Vor oder nach einem derartigen Dispensierschritt wird ein erfindungsgemäßer Reinigungsschritt durchgeführt, bei dem Spülflüssigkeit durch die Flüssigkeitskammer geleitet wird. Hierbei kann als Spülflüssigkeit auch Probenflüssigkeit verwendet werden.

Erfindungsgemäß wird das in der Flüssigkeitskammer der Flüssigkeitsfördervorrichtung vorhandene Medium, d.h. insbesondere die Flüssigkeit und vorhandene Verunreinigungen, während des Reinigungsschrittes, in dem ein Spülen der Flüssigkeitskammer erfolgt, in Schwingungen versetzt. Durch das Versetzen des Mediums in Schwingungen ist es möglich, auf in der Flüssigkeitskammer befindliche Verunreinigungen, insbesondere Gasblasen, derart einzuwirken, dass diese zerfallen. Sowohl Verunreinigungen, bei denen es sich sowohl um Partikel als auch Gasblasen handeln kann, zerfallen somit in kleinere Teilchen bzw. kleinere Blasen. Diese können leichter aus der Flüssigkeitskammer herausgespült werden. Hierdurch ist beispielsweise, wenn es sich bei der Flüssigkeitsfördervorrichtung um eine Dispensier- oder Pipettiervorrichtung handelt, ein Verstopfen der Düse auf Grund relativ großer Verunreinigungen vermieden. Durch das Versetzen des in der Flüssigkeitskammer befindlichen Mediums in Schwingungen und das dadurch hervorgerufene Zerfallen der Verunreinigungen, insbesondere der Gasblasen, können diese leichter aus der Flüssigkeitskammer herausgespült werden. Das erfindungsgemäße Verfahren ist insbesondere zum Herausspülen von Gasblasen geeignet, die durch bekannte Spülverfahren nicht oder nur schwer herausgespült werden können, da Gasblasen an den Oberflächen der Dispensiervorrichtung festhaften. Das Reinigen der Flüssigkeitskammer ist somit schneller möglich. Dies ist insbesondere bei automatischen Verfahren, wie dem Medium- oder Hochdurchsatzscreening von großem Vorteil. Es ist somit mit Hilfe des erfindungsgemäßen Verfahrens möglich, die Reinigungszeiten erheblich zu verringern. Ferner ist durch das erfindungsgemäße Verfahren die Zuverlässigkeit erhöht, da größere Verunreinigungen zerfallen und somit zuverlässig aus der Flüssigkeitskammer entfernt werden können. Des Weiteren ist der Verbrauch an Flüssigkeit bei einem Reinigungsschritt erheblich reduziert. Dies ist insbesondere bei Dispensiervorrichtungen, bei denen die Reinigung mit Hilfe von Probenflüssigkeit erfolgt, vorteilhaft.

Gemäß der Erfindung wird die Frequenz der in der Flüssigkeit auftretende Schwingungen während eines Reinigungsschritts variiert. Vorzugsweise wird hierzu die Frequenz eines Impulsgebers, der auf die Flüssigkeit einwirkt, variiert, wobei das Variieren der Frequenz des Impulsgebers ein Variieren der Schwingungsfrequenz des Mediums hervorruft. Besonders bevorzugt ist es, wenn hierzu als Impulsgeber ein Piezo-Aktor oder ein entsprechendes Bauelement verwendet wird. Handelt es sich bei der Flüssigkeitsfördervorrichtung um eine Dispensier- oder Pipettiervorrichtung, ist es besonders bevorzugt, den Impulsgeber, wie beispielsweise den Piezo-Aktor, durch den die Tropfenabgabe hervorgerufen wird, als auch Impulsgeber zum Erzeugen der Schwingungen in der Flüssigkeit zu verwenden. Dies hat den Vorteil, dass zur Durchführung des Reinigungsschritts einschließlich dem Spülen der Flüssigkeitskammer und dem erfindungsgemäßen Versetzen des Mediums in Schwingungen kein zusätzliches Bauteil erforderlich ist.

Das Variieren der Schwingungsfrequenz hat den Vorteil, dass Verunreinigungen bzw. Gasblasen unterschiedlicher Größe in Resonanz versetzt werden können und hierdurch der Zerfallsprozess ausgelöst wird. Das Variieren der Frequenz hat somit ein weiteres Verkürzen der Spülzeiten zur Folge. Hierdurch wird die Zuverlässigkeit der Flüssigkeitsfördervorrichtung erhöht und die zum Spülen erforderliche Flüssigkeitsmenge reduziert. Dies ist insbesondere beim Medium- und Hochdurchsatzscreening vorteilhaft. Die Frequenz bzw. die unterschiedlichen Frequenzen, die innerhalb eines Reinigungsschrittes erzeugt werden, können beispielsweise in Abhängigkeit der verwendeten Flüssigkeit und der sich hieraus beispielsweise ergebenden Gefahr größerer oder kleinerer Agglomerate vorteilhaft gewählt werden. Ebenso können die Frequenzen beispielsweise darauf abgestimmt werden, dass eine Flüssigkeit stärker oder schwächer zum Ausgasen und somit zum Bilden von Gasblasen neigt.

Versuche haben gezeigt, dass eine Minimalfrequenz von mindestens 1 kHz, vorzugsweise mindestens 3 kHz insbesondere beim Auftreten von Gasblasen vorteilhaft ist. Sehr gute Ergebnisse können ferner erzielt werden, wenn die Maximalfrequenz höchstens 60 kHz, vorzugsweise höchstens 40 kHz beträgt. Innerhalb der Minimalfrequenz und der Maximalfrequenz erfolgt ein kontinuierliches oder stufenweises Verändern der Frequenz. Gute Reinigungsergebnisse können bei einem stufenweisen Erhöhen der Frequenz um 200 - 250 Hz je Schritt erzielt werden. Hierbei wird die Frequenz ausgehend von einer Minimalfrequenz vorzugsweise in Richtung der Maximalfrequenz erhöht. Da größere Blasen in immer kleiner Blasen zerfallen bzw. Partikel in immer kleinere Partikel zerfallen, ist es vorteilhaft, die Frequenz ausgehend von der Minimalfrequenz zu einer Maximalfrequenz zu erhöhen, da hierbei der Zerfall in möglichst kleine ausspülbare Blasen bzw. Partikel beschleunigt werden kann. Ebenso ist es jedoch auch möglich, die Frequenz ausgehend von einer Maximalfrequenz stufenweise oder kontinuierlich zu verringern. Ggf. sind auch Wechsel zwischen einzelnen Frequenzen möglich, so dass innerhalb eines Reinigungsschrittes die Frequenzen mehrfach erhöht und erniedrigt werden. Des Weiteren ist eine Kombination beider Prozesse möglich.

Nachfolgend wird die Erfindung anhand einer bevorzugten Ausführungsform unter Bezugnahme auf die anliegenden Zeichnungen näher erläutert.

Es zeigen:
- Fig.1: eine schematische Vorderansicht einer Flüssigkeitsfördervorrichtung,
- Fig. 2: eine schematische Schnittansicht entlang der Linie II-II in Fig. 1,
- Fig. 3: ein Beispiel eines Anregungssignals zur Anregung von Piezo- Aktoren, und
- Fig. 4: einen erfindungsgemäßen Frequenzverlauf während eines Reinigungsschritts.

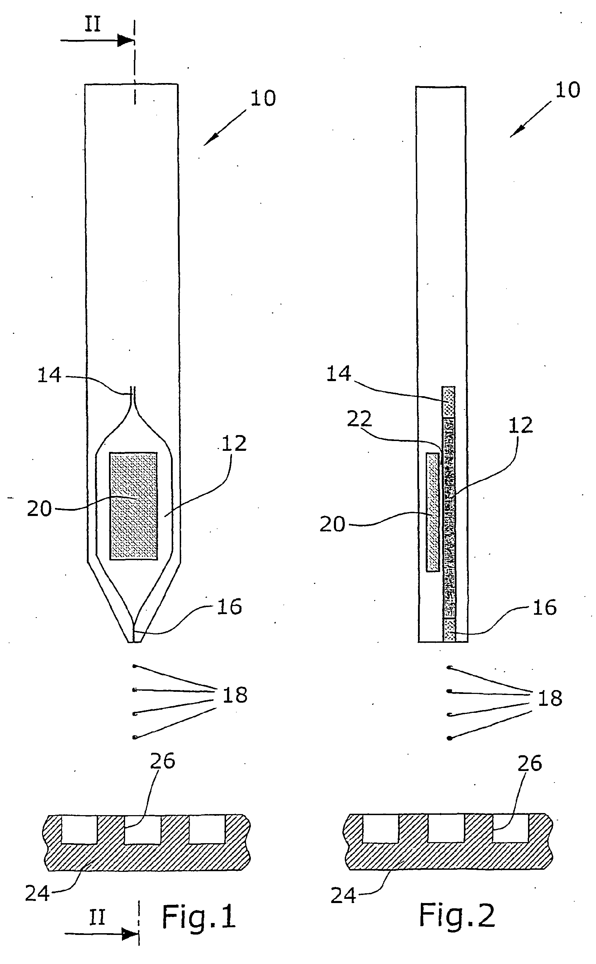

Bei der in den Fign. 1 und 2 dargestellten Flüssigkeitsfördervorrichtung 10 handelt es sich beispielsweise um eine Dispensiervorrichtung. Diese weist eine Flüssigkeitskammer 12 auf, die über einen Kanal 14 mit einem Reservoir verbunden ist. Bei einer Dispensiervorrichtung ist in dem Reservoir die durch eine Düse bzw. den Kapillarkanal 16 in Form von Tropfen 18 abgegebene Probenflüssigkeit vorhanden. Ggf. ist die Flüssigkeitskammer 12 ferner mit einem weiteren Reservoir verbunden, in dem Spülflüssigkeit zur Durchführung eines Reinigungsschrittes vorhanden ist. Auf die in der Flüssigkeitskammer 12 befindliche Flüssigkeit wird mittels eines Piezo-Aktors 20 eingewirkt. Der Piezo-Aktor 20 wirkt auf eine elastische Wand 22 der Flüssigkeitskammer 12 ein. Durch Anlegen einer Spannung an den Piezo-Aktor 20 wird die elastische Wand 22 verformt und ein Druckimpuls auf die in der Flüssigkeitskammer 12 vorhandene Flüssigkeit ausgeübt. Hierdurch erfolgt eine Abgabe eines Tropfens 18 beispielsweise in Richtung einer Mikrotiterplatte 24 zum Befüllen von in der Mikrotiterplatte 24 befindlichen Wells 26.

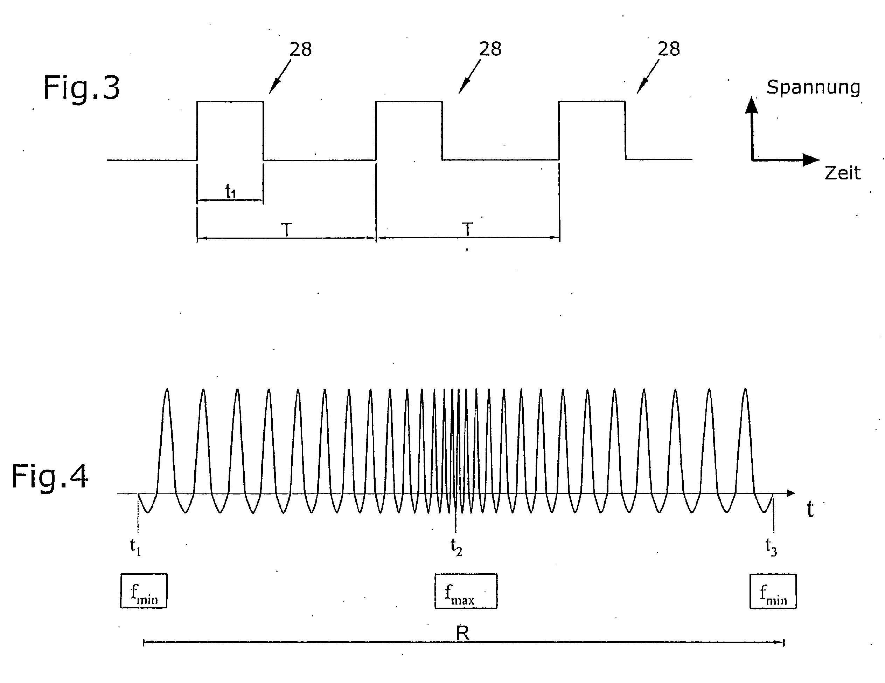

Bei der in Fig. 3 gezeigten Anregungspulsform handelt es sich um eine mögliche Spannungsimpulsfolge, die an den Piezo-Aktor 20 während des Dispensierschrittes zum Erzeugen von Tröpfchen 18 angelegt wird.

Der in Fig. 3 dargestellte Rechteckimpuls erzeugt über einen Zeitraum t₁ eine am Piezo-Aktor 20 anliegende Spannung, die nach einer Periodendauer T wiederholt wird. Durch jeden Anregungspuls 28 erfolgt die Abgabe eines Tröpfchens 18. Anstelle eines Rechteckimpuls kann beispielsweise auch ein trapezförmiger Impuls oder ein Rechteckimpuls mit beispielsweise schräg abfallender Flanke verwendet werden. Ebenso ist es möglich, polygonförmige Impulse an den Piezo-Aktor 20 anzulegen, wobei ggf. vor oder nach dem Anregungspuls 28 eine in die entgegengesetzte Richtung weisende Spannung anliegt. Ferner ist es beispielsweise auch möglich, sinusförmige Anregungspulse an den Piezo-Aktor 20 oder einen anderen Impulsgeber anzulegen.

Während eines Reinigungsschritts R (Fig. 4), der vor oder nach dem Dispensierschritt durchgeführt wird, wird eine beispielsweise sinusförmige Anregungsfrequenz an den Piezo-Aktor 20 angelegt. Die Frequenz kann beispielsweise von einer Minimalfrequenz fₘᵢₙ zu einem Zeitpunkt t₁ bis auf eine Maximalfrequenz fₘₐₓ zu einem Zeitpunkt t₂ kontinuierlich erhöht werden. Nach dem Zeitpunkt t₂ wird die Frequenz sodann wieder kontinuierlich bis zu einem Zeitpunkt t₃ auf eine Minimalfrequenz tₘᵢₙ verringert. Vorzugsweise werden innerhalb eines derartigen kontinuierlichen oder auch eines stufenweisen Variierens der Frequenz mehr als 50, vorzugsweise mehr als 80 und besonders bevorzugt mehr als 120 Schwingungsperioden erzeugt. Dies erfolgt vorzugsweise je Frequenzstufe.

Ein erfindungsgemäßer Reinigungsschritt kann insbesondere nach der Detektion eines Fehlers durchgeführt werden. Ebenso ist es ggf. zusätzlich möglich, einen Reinigungsschritt, beispielsweise in vorgegebenen Abständen, oder nach definierten Betriebssituationen präventiv durchzuführen. Es ist möglich, jedoch nicht erforderlich, vor oder nach jedem Dispensierschritt einen Reinigungsschritt R durchzuführen.

## Patentansprüche

1. Dispensierverfahren zum Dispensieren von chemischen und/ oder biologischen Flüssigkeiten in Kleinstmengen, bei welchem
in einem Dispensierschritt mittels einer Dispensiervorrichtung (10), mehrere Tröpfchen (18) abgegeben werden, indem ein Impulsgeber (20) auf eine Flüssigkeitskammer (12) einwirkt, um Tröpfchen (18) durch einen Kapillarkanal (16) abzugeben und
in einem Reinigungsschritt Spülflüssigkeit durch die Flüssigkeitskammer (12) geleitet wird, wobei während des Reinigungsschrittes das in der Flüssigkeitskammer (12) befindliche Medium zum Zerstören von Verunreinigungen, insbesondere Gasblasen, in Schwingungen versetzt wird
**dadurch gekennzeichnet,**
**dass** die Frequenz der Schwingungen während eines Reinigungsschrittes (R) variiert wird.

2. Dispensierverfahren nach Anspruch 1, bei welchem die Schwingungen mittels eines Impulsgebers (20) erzeugt werden, der vorzugsweise auf eine elastische Wand (22) der Flüssigkeitskammer (12) einwirkt.

3. Dispensierverfahren nach Anspruch 2, bei welchem die Frequenz des Impulsgebers (20) während eines Reinigungsschrittes (R) variiert wird.

4. Dispensierverfahren nach einem der Ansprüche 1-3, bei welchem die Frequenz derart gewählt wird, dass Verunreinigungen, insbesondere die Luftblasen, zerfallen.

5. Dispensierverfahren nach einem der Ansprüche 1-4, bei welchem eine Minimalfrequenz (fₘᵢₙ) während des Reinigungsschrittes (R) mindestens 1 kHz, vorzugsweise mindestens 3 kHz beträgt.

6. Dispensierverfahren nach einem der Ansprüche 1-5, bei welchem eine Maximalfrequenz (fₘₐₓ) während eines Reinigungsschrittes (R) höchstens 60 kHz, vorzugsweise höchstens 40 kHz beträgt.

7. Dispensierverfahren nach einem der Ansprüche 1-6, bei welchem die Frequenz von einer Minimalfrequenz (fₘᵢₙ) stufenweise erhöht wird und/ oder von einer Maximalfrequenz (fₘₐₓ) stufenweise erniedrigt wird.

8. Dispensierverfahren nach einem der Ansprüche 1-7, bei welchem der Impulsgeber (20) während des Dispensierschrittes mit einem Anregungspuls (28), der zur Abgabe von Tröpfchen (18) dient, betrieben wird.

## Claims

1. Dispensing method for dispensing chemical and/or biological liquids in minimum amounts, wherein
in a dispensing step, several droplets (18) are delivered by means of a dispensing device (10) by a pulse generator (20) acting upon a liquid chamber (12) to deliver droplets (18) through a capillary channel (16), and
in a cleaning step, flushing liquid is passed through the liquid chamber (12), wherein during the cleaning step, the medium in the liquid chamber (12) is vibrated in order to destroy impurities, particularly gas bubbles,
**characterized in**
**that** the frequency of the vibrations is varied during a cleaning step (R).

2. Dispensing method according to claim 1, wherein the vibrations are generated by means of a pulse generator (20) preferably acting upon an elastic wall (22) of the liquid chamber (12).

3. Dispensing method according to claim 2, wherein the frequency of the pulse generator (20) is varied during a cleaning step (R).

4. Dispensing method according to one of claims 1-3, wherein the frequency is selected such that impurities, particularly the air bubbles, disintegrate.

5. Dispensing method according to one of claims 1-4, wherein a minimum frequency (fₘᵢₙ) during the cleaning step (R) amounts to at least 1 kHz, preferably at least 3 kHz.

6. Dispensing method according to one of claims 1-5, wherein a maximum frequency (fₘₐₓ) during a cleaning step (R) amounts to 60 kHz at maximum, preferably to 40 kHz at maximum.

7. Dispensing method according to one of claims 1-6, wherein the frequency is increased stepwise from a minimum frequency (fₘᵢₙ) and/or is decreased stepwise from a maximum frequency (fₘₐₓ).

8. Dispensing method according to one of claims 1-7, wherein, during the dispensing step, the pulse generator (20) is operated with an excitation pulse (28) serving to deliver droplets (18).

## Revendications

1. Procédé de distribution de liquides chimiques et/ou biologiques de volumes minimaux, dans lequel
dans une étape de distribution, plusieurs gouttelettes (18) sont distribuées par un dispositif de distribution (10), à cause d'un impulseur (20) agissant sur une chambre de liquide (12) afin de dégager des gouttelettes (18) à travers d'un conduit capillaire (16), et
dans une étape de purification, de liquide de rinçage est conduit à travers de la chambre de liquide (12), le médium présent dans la chambre de liquide (12) pendant l'étape de purification est mis en vibrations pour détruire des impurités, particulièrement des bulles de gaz,
**caractérisé en ce**
**que** la fréquence des vibrations est variée pendant une étape de purification (R).

2. Procédé de distribution selon la revendication 1, dans lequel les vibrations sont générées par un impulseur (20), agissant de préférence sur une paroi élastique (22) de la chambre de liquide (12).

3. Procédé de distribution selon la revendication 2, dans lequel la fréquence dudit impulseur (20) st variée pendant une étape de purification (R).

4. Procédé de distribution selon l'une quelconque des revendications 1-3, dans lequel la fréquence est choisie de manière à ce que des impurités, particulièrement des bulles d'air, soient désintégrées.

5. Procédé de distribution selon l'une quelconque des revendications 1-4, dans lequel une fréquence minimale (fₘᵢₙ) pendant une étape de purification (R) est au moins 1 kHz, de préférence au moins 3 kHz.

6. Procédé de distribution selon l'une quelconque des revendications 1-5, dans lequel une fréquence maximale (fₘₐₓ) pendant une étape de purification (R) est au plus 60 kHz, de préférence au plus 40 kHz.

7. Procédé de distribution selon l'une quelconque des revendications 1-6, dans lequel la fréquence est graduellement augmentée à partir d'une fréquence minimale (fₘᵢₙ) et/ou est graduellement réduite à partir d'une fréquence maximale (fₘₐₓ).

8. Procédé de distribution selon l'une quelconque des revendications 1-7, dans lequel l'impulseur (20) est opéré, pendant l'étape de distribution, avec une impulsion d'excitation (28) servant à dégager des gouttelettes (18).
